# EUROPEAN PATENT SPECIFICATION

(11) **EP 1 402 376 B1**
(45) Date of publication and mention of the grant of the patent: **30.06.2010**
(21) Application number: 02737100.4
(22) Date of filing: 24.05.2002
(51) Int. Cl.: G06F 13/40, H04B 10/00, H04B 10/18, G02B 6/12

(54) **OPTICAL BUS ARRANGEMENT FOR COMPUTER SYSTEM**
OPTISCHE BUSANORDNUNG FÜR EIN COMPUTERSYSTEM
ARCHITECTURE DE BUS OPTIQUE POUR SYSTEME INFORMATIQUE

(30) Priority: 24.05.2001 US 293349 P
(43) Date of publication of application: 31.03.2004
(73) Proprietor: Tecey Software Development KG, LLC, Dover, DE 19904 (US)
(72) Inventor: SANCHEZ OLEA, Jorge, Poway, CA 92064 (US)
(74) Representative: Hackney, Nigel John
(86) International application number: PCT/US2002/016253
(87) International publication number: WO 2002/095599

(56) References cited:
- US-A- 4 350 973
- US-A- 4 695 120
- US-A- 4 732 446
- US-A- 4 908 823
- US-A- 4 953 930
- US-A- 5 237 441
- US-A- 5 315 424
- US-A- 5 602 667
- US-B1- 6 185 648
- PATENT ABSTRACTS OF JAPAN vol. 1999, no. 12, 29 October 1999 (1999-10-29) & JP 11 205232 A (FUJI XEROX CO LTD), 30 July 1999 (1999-07-30)
- PATENT ABSTRACTS OF JAPAN vol. 1998, no. 10, 31 August 1998 (1998-08-31) & JP 10 123350 A (FUJI XEROX CO LTD), 15 May 1998 (1998-05-15)

## Description

### FIELD OF THE INVENTION

The present invention relates to high-speed bus architectures for computer systems and, more particularly, to an optical bus arrangement capable of incorporation within a computer system.

### BACKGROUND OF THE INVENTION

As is well known, the speed of conventional computer systems such as servers, workstations and personal computers has been increasing as a result of corresponding increases in the speed of the components of such systems. In particular, central processing units (CPUs) continue to increase in speed as a result of increasing miniaturization of internal circuit components and the utilization of lower voltage logic signals. In addition, memory elements such as RAM, ROM and mass storage devices continue to increase in speed as well as capacity.

These increases in performance have been necessary to accommodate the explosive growth of the Internet and the increasing demands this growth has placed upon such computer systems, particularly servers. For example, serving requests from multiple users may require server computers to rapidly search through large amounts of information within associated databases. In order to ensure adequate performance under these conditions the CPU of the server computer must be capable of rapidly locating and accessing large amounts of data.

Unfortunately, disparities in the performance increases of conventional computer system components have resulted in mismatches of the speed of such components. For example, ROM and RAM memory elements have been designed to be capable of very high density storage, but operate slowly relative to CPUs in connection with data access, transmission and reception.

Recently, various buffering techniques have been employed in an attempt to address the problem of incompatible data transfer speeds within computer systems. This approach entails inserting data and address buffers in various parts of the computer system. As is known, buffers essentially comprise low-capacity memory circuits capable of operation of at very high speeds relative to other memory elements (e.g., RAM and ROM). The small amount of memory with which buffers are typically configured is often used to store program instructions and associated data used during execution of the system's CPU. That is, information to be processed by the CPU is retrieved from slower memory elements and placed in one or more buffers prior to the time at which such information is scheduled to be processed. Once it is determined that the CPU is ready to process this information, it is transferred to the CPU over one or more buses connected to the buffers.

It is desired that the internal buses of computer systems (e.g., address, data, clock and control buses) operate at speeds that are sufficiently fast so as not to introduce an impediment to the transfer of information from one device to another. That is, internal buses should be capable of supporting operation at transfer speeds at least as high as the speed of the attached devices. However, the speed of the buses in many conventional computer systems has not kept pace with the performance of other system devices, and the resulting speed mismatch has resulted in the use of buffering techniques of the type described above.

Various approaches have been used in an attempt to increase the speed of buses and thereby improve overall system performance and obviate the need for extensive buffering. In one approach, ground planes have been incorporated within buses in order to increase the applicable data transfer speed. However, the nature of electronic signals tends to give rise to potentially problematic phenomenon when buses become operative at relatively high frequencies (e.g., greater than 200MHz). One such phenomenon is that the short wavelengths of high-frequency electronic signals experience "transmission line effects" and may be partially reflected upon transmission and reception. In addition, the transmission of high-speed electronic signals over buses requires the use of high-speed drivers within the integrated circuits connected to the buses. Because such drivers generally need to be configured to drive multiple loads, they tend to be relatively large and thus often undesirably consume extensive amounts of chip "real estate" and power.

Although known "line termination" techniques have been employed in an effort to alleviate the deleterious transmission line effects affecting high-speed buses, the increasing prevalence of device speeds in excess of 1 GHz is expected to exacerbate the adverse consequences of such effects. Moreover, as device speeds continue to rise above 1GHz it is anticipated that buses supporting electronic signals will not only experience transmission line effects but will also need to be designed using techniques applicable to high-frequency and microwave circuit design. As will be appreciated by those skilled in the art, microwave design techniques tend to be highly complex and require potentially costly modification of surrounding packaging.

Another approach to increasing bus speed has involved simply increasing bus size or "width". That is, rather than simply employing buses with 16 distinct bit lines, computers have been configured to incorporate bus widths of 32, 64 and even 128 bits. Although this approach has enabled higher data transfer speeds to be achieved, it has proven to be relatively costly. As mentioned above, the transistors used to drive internal bus lines tend to be large and thereby require significant chip area and power. This limits the potential for further component miniaturization, which may consequently lower manufacturing yields and thereby increase overall costs. Moreover, the high power consumption of such driver transistors results in heating of the surrounding integrated circuit, which may decrease reliability. The incorporation of wide (e.g., 64 or 128 bit) bus architectures may further reduce reliability and increase expense by requiring the manufacture of multi-layer printed circuit boards requiring many more traces than would otherwise be required by implementations using narrower bus widths.

In addition to the implementation of wider bus widths, efforts have been made to alter the structure and operation of various processing elements in order to prevent the limited speed of individual bus lines from limiting the overall performance of computer systems. For example, modem processor architectures are generally disposed to provide for prefetching and predecoding of instructions in order to achieve faster execution. Specifically, the instructions to be executed by the CPU are fetched in advance, placed in a buffer inside the CPU, and then decoded and prepared prior to being needed for execution. Such operations can be of particular benefit when multiple instructions can be efficiently fetched in advance from contiguous locations in RAM. However, in many instances significant "branches" in instructions occur which require jumps to significantly different locations in memory. In these cases prefetching of instructions is generally of little or no benefit, and the result is that CPU processing cycles may be wasted.

In short, significant efforts have been made to compensate for the limitations on the speed of conventional bus lines by increasing bus widths and by modifying the architecture of processing components. Unfortunately, it appears that as the speed of processing components continues to increase, even these efforts may be insufficient to prevent overall system performance from being limited by the speed of internal buses.

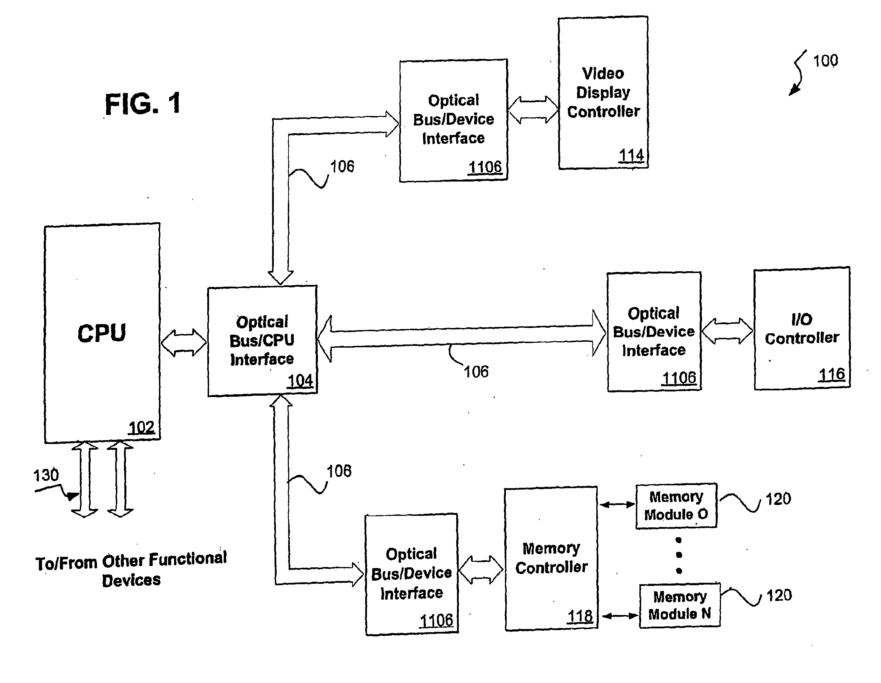

U. S. Patent No. 6,317,242, issued 11/13/2001, is directed to coupling an optical signal generated by laser diodes (42a) in FIG. 1 on circuit boards (40) located at different points along one surface of a photoconductor layer (21) to a photodiode (42) located on the opposite surface of the photoconductor layer (21) in an environment where the circuit boards (40) are repeatedly exchanged.

Japanese Patent Publication No. JP10123350, published 05/15/1998, discloses subject matter that is similar to that of U. S. Patent No. 6,317,242 described above.

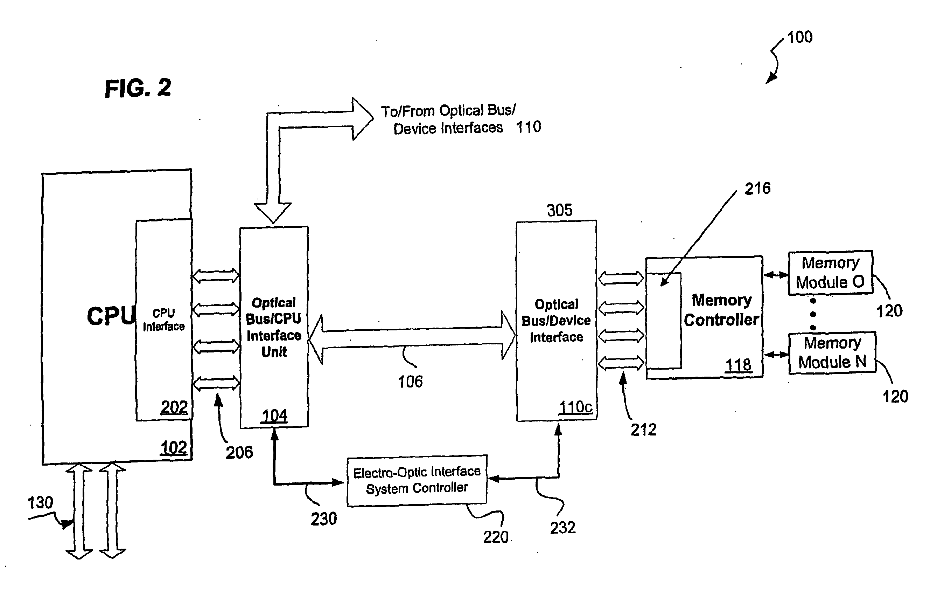

U. S. Patent No. 5,315,424, issued 05/24/1994, is directed to a fiber optic interface for a backplane bus (12) in FIG. 2 using commercially available circuit modules (10).

U. S. Patent No. 4,953,930, issued 09/04/1990, is directed to an integrated circuit socket (1) in FIG. 2 that includes embedded hybrid ASICs (3A,3B) and optical transceiver columns (5A-5D) coupled to the ASICs (3A,3B).

U. S. Patent No. 5,602,667, issued 02/11/1997, is directed to a fiber optic interface between a device controller and a host computer that switches between different data transmission protocols to accommodate delays from distances ranging from 500 m to 10 km.

U. S. Patent No. 4,350,973, issued 09/21/1982, is directed to a fiber optic receiver (27) in FIG. 3 that receives a serially encoded optical signal and decodes the optical signal to generate a parallel TTL digital signal.

U. S. Patent No. 4,908,823, issued 03/13/1990, is directed to a data communications interface (10) between a backplane bus (12) and a fiber optic transceiver (14) in FIG. 1.

Accordingly, the present invention provides a computer system assembly according to accompanying claim 1.

### BRIEF DESCRIPTION OF THE DRAWINGS

For a better understanding of the nature of the features of the invention, reference should be made to the following detailed description taken in conjunction with the accompanying drawings, in which:
FIG. 1 provides a block diagrammatic representation of an exemplary embodiment of a computer system configured with an optical bus in accordance with the present invention.
FIG. 2 is a more detailed block diagrammatic representation of a selected portion of the inventive computer system of FIG. 1.
FIG. 3 provides an illustrative representation of an exemplary implementation of a CPU interface.
FIG. 4 provides a more detailed representation of a particular implementation of a CPU interface 202 in which certain interface logic is realized using a pipelined architecture.
FIG. 5 illustratively represents the transmission line interconnect arrangement.
FIG. 6 is a block diagrammatic representation of a bus/CPU interface.
FIGS. 7A-7D are partially schematic representations of various drive and receive circuits included within a bus/CPU interface.
FIG. 8 provides a more detailed block diagrammatic representation of array control circuitry.
FIG. 9 provides a cross-sectional view of an exemplary packaging configuration for the computer system of the present invention
FIG. 10 is a block diagrammatic representation of bus/device interface.
FIGS. 11A-11D are partially schematic representations of the various drive and receive circuits included within the bus/device interface.
FIG. 12 is a more detailed block diagrammatic representation of certain array control circuitry.
FIG. 13 provides an illustrative representation of an exemplary implementation of a memory controller interface.
FIG. 14 depicts a second exemplary embodiment of a computer system incorporating an optical bus in accordance with the present invention.
FIG. 15 provides a more detailed illustrative representation of a CPU incorporating an electro-optic interface.
FIG. 16 illustratively represents a third exemplary embodiment of a computer system in accordance with the present invention.
FIG. 17 depicts selected portions of an optical bus arrangement incorporating a bus/CPU interface and a bus/device interface in optical communication via an 8-bit optical bus and a 2-bit optical control bus.
FIG. 18 is a timing diagram representative of the data transfer process from the memory controller to the CPU of FIG. 17.

### DETAILED DESCRIPTION OF THE INVENTION

FIG. 1 provides a block diagrammatic representation of an exemplary embodiment of a computer system 100 configured with an optical bus in accordance with the present invention. The computer system includes a central processing unit (CPU) 102 electrically coupled to an bus/CPU interface 104. As shown, the bus/CPU interface 104 is in optical communication with an optical bus 106. The computer system further includes a plurality of bus/device interfaces 110 in optical communication with the optical bus 106. Each of the bus/device interfaces 110 is electrically connected to a particular functional device of the computer system 100. Specifically, in the exemplary embodiment of FIG. 1 the bus/device interface 110a is connected to a video display controller 114, the bus/device interface 110b is connected to an I/O controller 116 and the bus/device interface 110c is connected to a memory controller 118. As shown, the memory controller 118 controls the operation of a plurality of memory modules 120. A conventional bus 130 capable of supporting electronic signaling may also optionally be connected to the CPU 102 in order to provide a conventional data transfer path to one or more other functional devices (not shown).

As is described below, the bus/CPU interface 104 and bus/device interfaces 110 provide electro-optic interfaces between the optical bus 106 and the various functional devices of the computer system 100. The interfaces 104, 106 also provide various connections and drivers which collectively render the existence of the optical bus 106 transparent to the operating system software of the computer system 100. As may be appreciated by reference to FIG. 1, the interfaces 104, 106 enable independent connections to be established to all functional devices of the computer system 100 This enables each functional device to be served by a high-speed connection or dedicated information transmission line.

The architecture of the computer system 100 of the present invention affords numerous advantages relative to conventional computers incorporating electronic bus configurations. For example, as will be demonstrated below the utilization of an optical bus 106 enables matching of the speed of the functional devices within the computer system 100 to the various interconnections therebetween. In this regard the inventive architecture enables the provision of substantially any data transfer speed required by the CPU 104 or by the functional units of the computer system 100. Moreover, the utilization of an optical data bus 106 in accordance with the teachings herein can reduce the cost, complexity and power consumption associated with effecting high-speed data transfer by reducing the need for buses comprised of a large number parallel bus lines adapted to carry electronic signals.

As will be appreciated from the teachings herein, the use of optical signals within the inventive computer system 100 enables establishment of bus bandwidths substantially higher than is presently possible using buses configured to support electronic signals. In addition, the packaging methods described herein facilitate a reduction in the distances that the electrical signals existing at the terminations of the optical bus 106 are required to travel to complete the necessary connections.

Turning now to FIG. 2, a more detailed block diagrammatic representation is provided of a selected portion of the inventive computer system 100. As shown, the computer system 100 further includes a CPU interface 202 electrically connected to the bus/CPU interface 104 by a transmission line interconnect arrangement 206. The CPU interface 202 includes circuitry necessary to drive the optical bus 106 as well as to determine its size and speed. The transmission line interconnect arrangement 206 provides operative electronic coupling between the CPU 102 and the bus/CPU interface 104. As is described below, the bus/CPU interface 104 contains an array of lasers, optical interconnects and control circuits necessary for the CPU 102 to interface to the optical bus 106. In the exemplary embodiment the optical bus 106 comprises a plurality of optical channels that may be implemented, for example, using multiple-mode or single-mode optical fibers. Alternately, the optical channels of the optical bus 106 may simply consist of sections of space through which optical energy may propagate via air or a vacuum. In the exemplary embodiment the optical bus 106 functions to carry optical signals to and from the CPU 102 and the various functional devices.

Each functional device comprises a component of the computer system 100 configured to perform a specialized activity and may be realized as, for example, a memory controller, memory module, I/0 controller or I/0 channel, video display controller, application specific integrated circuit, co-processor, additional CPU or, any other functional unit. In the embodiment of FIGS. 1 and 2, the bus/device interface 110c provides an electro-optic interface which facilitates communication between the optical bus 106 and the memory controller 118. Except as otherwise described below, each bus/device interface 110 provides functionality substantially identical to the electro-optic interface functionality provided by the bus/CPU interface 104. As shown, the bus/device interface 110c is electrically connected to the memory controller 118 via a transmission line interconnect arrangement 212 configured to carry electrical signals to and from the memory controller 118. The transmission line interconnect arrangement 212 terminates at a memory controller interface 216 configured to provide logic compatibility between the bus/device interface 110c and the memory controller 118. In the exemplary embodiment the memory controller 118 conventionally accesses the memory modules 120 and buffers the retrieved information as necessary to speed its transfer to the CPU 102. The memory modules 120 constitute the working memory of the CPU 102, and are typically implemented using dynamic RAM or other available read-write memory technologies.

Referring again to FIG. 2, an electro-optic interface system controller 220 is connected to the bus/CPU interface 104 and to the bus/device interface 110c through via a first control bus 230 and a second control bus 232, respectively. The electro-optic interface system controller 220 is configured to control the operation of the bus/CPU interface 104 and to the bus/device interfaces 110 in accordance with the teachings herein. The control of the functional components included within the interfaces 104, 110 effected by the electro-optic interface system controller 220 includes, for example, biasing of laser arrays, controlling the gain of detection amplifiers, calibrating laser drive currents, and compensating for temperature drift and manufacturing variations among such functional components.

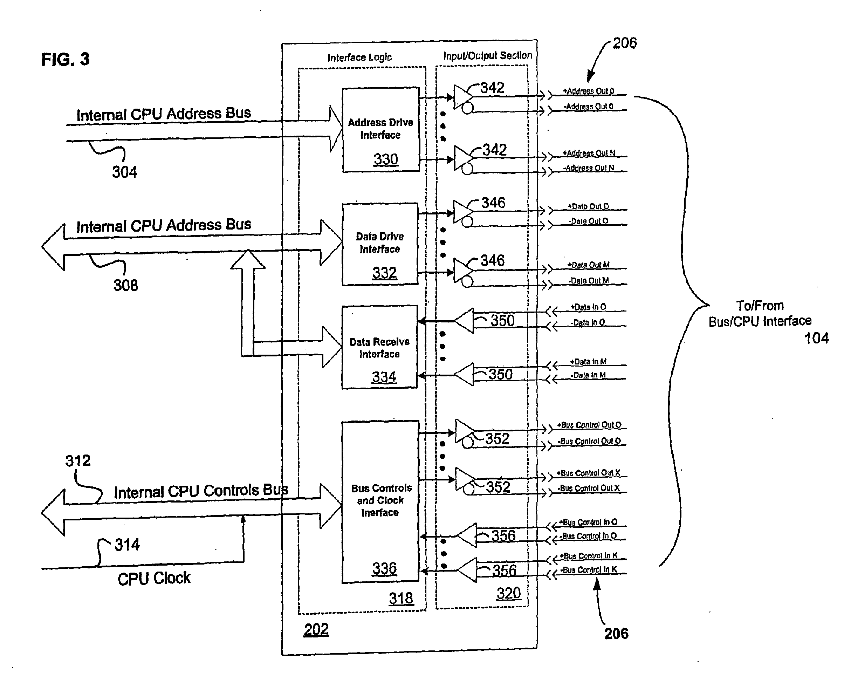

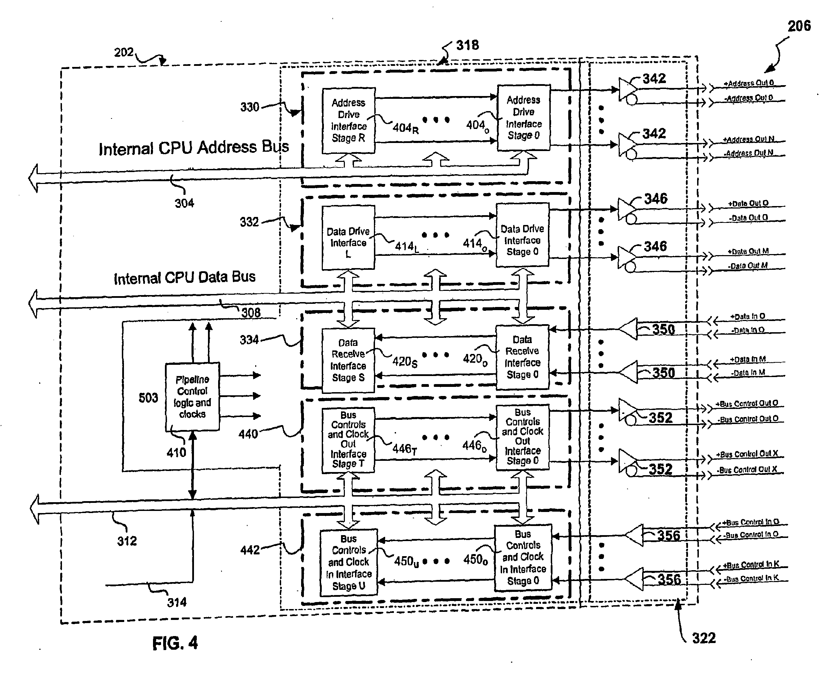

FIG. 3 provides an illustrative representation of an exemplary implementation of the CPU interface 202. In the exemplary embodiment the CPU interface 202 provides the logic necessary to connect the internal buses of the CPU 102 to the optical bus elements of the computer system 100. The internal buses of the CPU 102 generally consist of an internal CPU address bus 304, a bi-directional internal CPU data bus 308, a bi-directional internal CPU controls bus 312, and a CPU clock 314. As shown, the CPU interface 202 includes interface logic 318 and an input/output section 320. The interface logic 318 consists of a number of logic modules including an address drive interface 330, a data drive interface 332, a data receive interface 334, and a bus controls and clock interface 336. As will be described with reference to FIG. 4, each of the logic modules of the interface logic 318 is configured to perform a dedicated logical interface function.

The input/output section 320 consists of a set of drivers and receivers designed to drive the transmission line interconnect arrangement 206. These drivers and receivers may be implemented using differential drivers and differential receivers in order to minimize cross-talk interference between the various signals carried by the optical bus 106. As shown in FIG. 3, the input/output section 320 contains a first plurality of differential line drivers 342, each of which has an input electrically connected to the address drive interface 330 and a differential output electrically connected to a pair of address lines of the transmission line interconnect arrangement 206. A second plurality of differential line drivers 346 is also provided, each of which has an input electrically connected to the data drive interface 332 and a differential output electrically connected to a pair of data lines of the transmission line interconnect arrangement 206. The input/output section 320 further includes a first plurality of differential line receivers 350, each of which has a differential input electrically connected to a pair of data lines of the transmission line interconnect arrangement 206 and an output electrically connected to the data receive interface 334. A third plurality of differential line drivers 352 is also provided, each of which has an input electrically connected to the bus controls and clock interface 336 and a differential output electrically connected to a pair of bus control lines of the transmission line interconnect arrangement 206. The input/output section 320 further includes a second plurality of differential line receivers 356, each of which has a differential input electrically connected to a pair of bus control lines of the transmission line interconnect arrangement 206 and an output electrically connected to the bus controls and clock interface 336.

Each of the differential line drivers of the input/output section 320 is operative to convert signals received from the interface logic 318 to a level appropriate for interfacing with the associated optical channels of the optical bus 106. Each such differential line driver will typically be realized as a high-performance differential driving element capable of operation at speeds of multiple Gigabits per second. In the exemplary embodiment the CPU interface 202, including the differential driving and receiving elements of its input/output section 320, will generally be realized on a common integrated circuit with the CPU 102 and fabricated using the same processing techniques. Each of the differential line receivers of the input/output section 320 is configured to receive and condition signals arriving from the optical channels of the optical bus 106. In addition, the differential line receives translate these received signals to logic levels appropriate for the interface logic 318, which typically correspond to the logic levels used in conventional microprocessors. In alternate implementations the interface logic 318 may be configured so as to implement multi-level logic in which a unique logical value is assigned to each of multiple analog voltage levels.

FIG. 4 provides a more detailed representation of a particular implementation of the CPU interface 202 in which the interface logic 318 is realized using a pipelined architecture. The pipelined architecture of FIG. 4 enables three different operating parameters to be adjusted in order to achieve desired operational characteristics; namely, bus width, bus depth and clock speed may be adjusted so as to attain a desired overall data transfer bandwidth and performance.

Turning to FIG. 4, the address drive interface 330 is depicted as being comprised of a set of R+1 pipelined address drive stages 404. In operation, the pipelined address drive stages 404 are loaded with information from the internal CPU address bus 304 during one execution cycle of the CPU 102. The number of stages 404 (R + 1) is generally selected to correspond to the number of memory modules 120 with respect to which read-write functions are to occur. As shown, the outputs of an initial one of the address drive stages 404₀ are connected to the inputs of the first plurality of differential line drivers 342. The number of the first plurality of differential line drivers 342 included within the input/output section 320 typically corresponds to the number of address bits utilized in a specific implementation (e.g., a byte-sized address bus would utilize a set of eight drivers 342).

As may be appreciated with reference to FIG. 4, the pipelined arrangement of the address drive stages 404 facilitates faster operation of the CPU to 102 by enabling loading into the stages 404 of a block of addresses locations during one CPU execution cycle. It is anticipated that the pipelined arrangement of the stages 404 may be particularly complementary to those CPU architectures incorporating "pre-fetching" functionality. As is also shown in FIG. 4, a set of dedicated pipeline control and clock circuits existing within the interface logic 318 are collectively represented as a pipeline control logic and clocks block 410. The dedicated circuits of block 410 generate the high-speed clock signals necessary to drive the pipelined stages 404 and the other pipelined arrangements described below.

In a similar manner, the data drive interface 332 consists of a pipelined arrangement of a set of L + 1 data drive interface stages 414, wherein L+1 characterizes the depth of the pipelined arrangement. The "width" of the pipelined arrangement of the data drive interface stages 408 is determined by the number of the second plurality of differential line drivers 346 and its clock speed determined by the pipeline control logic and clocks block 410. Likewise, the data receive interface 334 is comprised of a pipelined arrangement of a set of S + 1 data receive interface stages 420, wherein S+1 characterizes the depth of the pipelined arrangement. The width of the pipelined arrangement of the data receive interface stages 420 is determined by the number of the first plurality of differential line receivers 350 and its clock speed determined by the pipeline control logic and clocks block 410. All of the stages of the pipelined arrangements forming the data drive interface 332 and the data receive interface 334 are connected the internal CPU data bus 308, and can be loaded within one CPU execution cycle. The arrangement of the data drive interface 332 and the data receive interface 334 allows for a full duplex communication channel to be established between the CPU 102 and the memory controller 118. The duplex characteristic of this channel allows the CPU 102 to write to a given memory module 120 while simultaneously reading from a different memory module 120, provided that the architecture of the memory controller 118 contains a suitable buffering arrangement.

As shown by FIG. 4, the bus controls and clock interface 336 is comprised of a controls-out pipelined arrangement 440 characterized by a depth of T+1 and a controls-in pipelined arrangement 442 characterized by a depth of U+1. The controls-in pipelined arrangement 442 functions to drive various control signals subsequently transmitted over the optical bus 106 in the manner described below, while the controls-out pipelined arrangement 440 is utilized to receive control signals received over the optical bus 106. The controls-out pipelined arrangement 440 consists of a set of T+1 controls-out interface stages, its width is determined by the number of the third plurality of differential line drivers 352, and its clock speed determined by the pipeline control logic and clocks block 410. The controls-in pipelined arrangement 442 consists of a set of U+1 controls-in interface stages, its width is determined by the number of the second plurality of differential line drivers 356, and its clock speed determined by the pipeline control logic and clocks block 410.

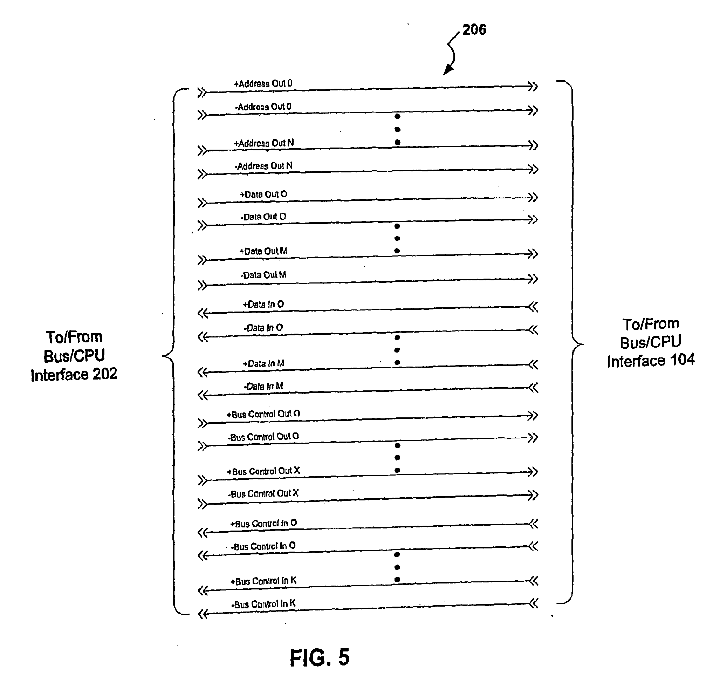

FIG. 5 illustratively represents the transmission line interconnect arrangement 206. As noted above, the transmission line interconnect arrangement 206 provides a set of electrical connections between the CPU interface 202 and the bus/CPU interface 104. The transmission line interconnect arrangement 206 functions to carry the information for the internal CPU address bus 204, internal CPU data bus 308, and the CPU clock and controls bus 312. In the embodiment of FIG. 5, the transmission line interconnect arrangement 206 is implemented using differential transmission lines realized as striplines imprinted upon the packaging containing the CPU 102. Utilization of differential transmission lines minimizes the degree of cross talk among the various signals carried by the transmission line interconnect arrangement, and increases the signal-to-noise ratio of the signals transmitted.

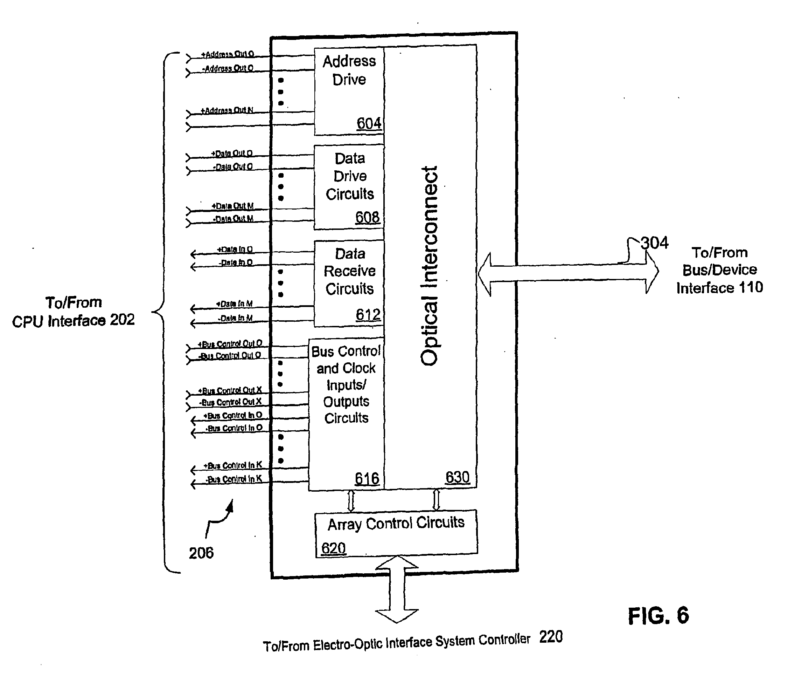

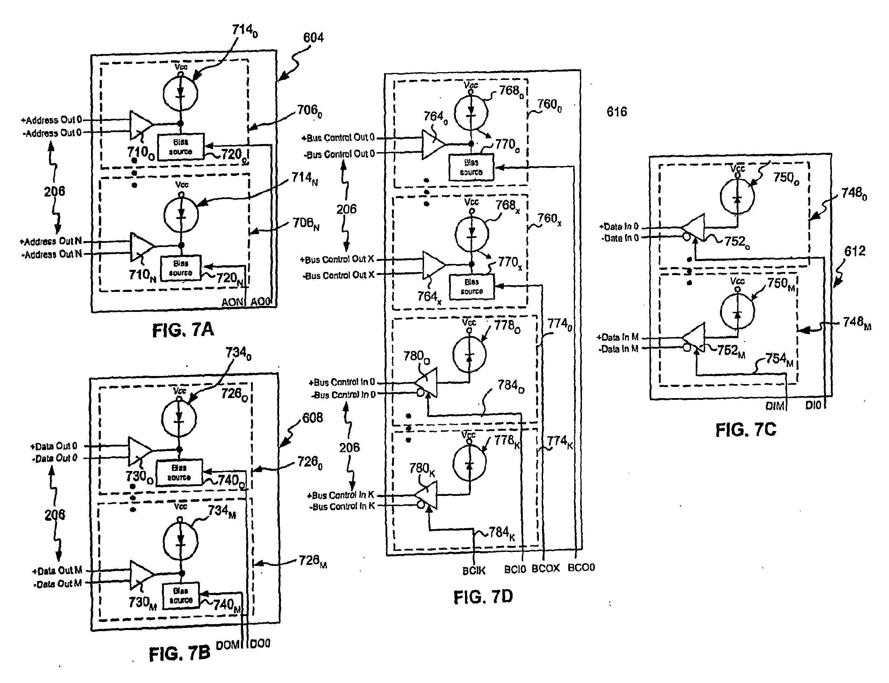

Turning now to FIG. 6, a block diagrammatic representation is provided of the bus/CPU interface 104. The bus/CPU interface 104 functions to convert electrical signals originating on the internal buses of the CPU 102 into optical signals transmitted to the optical bus 106. To this end the bus/CPU interface 104 contains opto-electronc circuits and control circuits able to perform the necessary conversion functions, such circuitry being described in further detail with reference to FIGS. 7-8. As shown in FIG. 6, the bus/CPU interface 104 includes address drive circuitry 604, data drive circuitry 608, data receive circuitry 612, bus controls and clock input/output circuitry 616, array control circuitry 620, and an optical interconnect 630.

Referring now to FIGS. 7A-7D, partially schematic representations are provided of the various drive and receive circuits included within the bus/CPU interface 104. As shown in FIG. 7A, the address drive circuitry 604 is comprised of an array of electrical to optical converters 706 operative to convert the address signals from the differential line drivers 342 into optical signals disposed to carry address information via the optical bus 106. Specifically, each electrical to optical converter 706 is responsible for converting one bit of each multi-bit address signal carried by the optical bus 106. As shown, a first electrical to optical converter 706₀ is comprised of VCSEL laser driver 710₀ having an output connected to a control terminal of a VCSEL laser 714₀. The first electrical to optical converter 706₀ further includes a bias source 720ₒ set to pull sufficient current through the VCSEL laser 714₀ such that its operating point is positioned at a value slightly above its lasing threshold. The remaining electrical to optical converters 706 of the address drive circuitry 604 may be configured substantially identically to the first electrical to optical converter 706₀.

Attention is now drawn to FIG. 7B, which shows the data drive circuitry 608 to be comprised of an array of electrical to optical converters 726. Each converter 726 is operative to convert the data signals from one of the differential line drivers 346 into optical signals disposed to carry data information via the optical bus 106. Specifically, each electrical to optical converter 726 is responsible for converting one bit of each multi-bit data signal carried by the optical bus 106 to, for example, the memory controller 118. As shown, a first electrical to optical converter 726₀ is comprised of VCSEL laser driver 730₀ having an output connected to a control terminal of a VCSEL laser 734₀. The first electrical to optical converter 726₀ further includes a bias source 740ₒ set to pull sufficient current through the VCSEL laser 734₀ such that its operating point is positioned at a value slightly above its lasing threshold. The remaining electrical to optical converters 726 of the data drive circuitry 608 may be configured substantially identically to the first electrical to optical converter 726₀.

FIG. 7C provides a partially schematic representation of the data receive circuitry 612. As shown, the data receive circuitry 612 is comprised of an array optical to electrical converters 748 operative to convert the data received from the optical bus 106 into electrical signal energy representing the individual bits of data to be sent to the differential line receivers 350. Each optical to electrical converter 748 corresponds to one bit of each multi-bit data signal carried by the optical bus 106 from, for example, the memory controller 118. The first optical to electrical converter 748₀ is comprised of a photodiode 750₀ and a transimpedance amplifier/differential driver 752₀. The gain of the transimpedance amplifier/differential driver 752₀ is controlled by a gain control signal 754₀ received from the array control circuitry 620. The transimpedance amplifier/differential driver 752₀ operates to amplify the current generated at the photodiode 750₀, which is proportional to the light received from a corresponding channel of the optical bus 106. The remaining optical to electrical converters 748 of the data receive circuitry 612 may be configured substantially identically to the first optical to electrical converter 748₀.

Referring to FIG. 7D, a partially schematic representation is provided of the bus controls and clock input/output circuitry 616. As shown, the bus controls and clock input/output circuitry 616 is comprised of an array of electrical to optical converters 760 and an array of optical to electrical converters 774. Each electrical to optical converter 760 is operative to convert the control signals from one of the differential line drivers 352 into optical signals disposed to carry control information via the optical bus 106. Specifically, each electrical to optical converter 760 is responsible for converting one bit of each multi-bit control signal carried by the optical bus 106 to, for example, the memory controller 118. As shown, a first electrical to optical converter 760₀ is comprised of VCSEL laser driver 764₀ having an output connected to a control terminal of a VCSEL laser 768₀. The first electrical to optical converter 760₀ further includes a bias source 770₀ set to pull sufficient current through the VCSEL laser 768₀ such that its operating point is positioned at a value slightly above its lasing threshold. The remaining electrical to optical converters 760 of the bus controls and clock input/output circuitry 616 may be configured substantially identically to the first electrical to optical converter 760₀.

Again referring to FIG. 7D, the electrical converters 774 are operative to convert the control signals received from the optical bus 106 into electrical signal energy representing the individual bits of control information to be sent to the differential line receivers 356. Each optical to electrical converter 774 corresponds to one bit of each multi-bit control signal received over the optical bus 106 from, for example, the memory controller 118. The first optical to electrical converter 774₀ is comprised of a photodiode 778₀ and a transimpedance amplifier/differential driver 780₀. The gain of the transimpedance amplifier/differential driver 780₀ is controlled by a gain control signal 784₀ received from the array control circuitry 620. The transimpedance amplifier/differential driver 780₀ operates to amplify the current generated at the photodiode 778₀, which is proportional to the light received from a corresponding channel of the optical bus 106. The remaining optical to electrical converters 774 may be configured substantially identically to the first optical to electrical converter 774₀.

The bus controls and clock input/output circuitry 616 facilitates establishment of a control bus within the computer system 100 via the optical interconnections supported by the optical bus 106. During operation of the computer system 100 the control bus effects the transmission of control information to and from the CPU 102 and the various functional devices of the computer system 100. For example, the control bus supports the communication of control and handshaking information between the CPU 102 to the memory controller 118. In addition, the bus controls and clock input/output circuitry 616 generates one or more system clocks for distribution to the various functional devices of the computer system 100 via the optical bus 106. This distribution of one or more system clocks facilitates a number operations, such as synchronous data transmission between the CPU 102 and the memory controller 118.

Various options exist for manufacture of the bus/CPU interface 104. In one approach, all of the components of the bus/CPU interface 104 are included in a single GaAs integrated circuit or equivalent high-density fabrication technology. Alternatively, one or more elements of the bus/CPU interface 104 may be implemented as separate integrated circuits. In this case the plural integrated circuits comprising the bus/CPU interface 104 would preferably then be placed in a hybrid module so as to minimize the lengths of electrical connections.

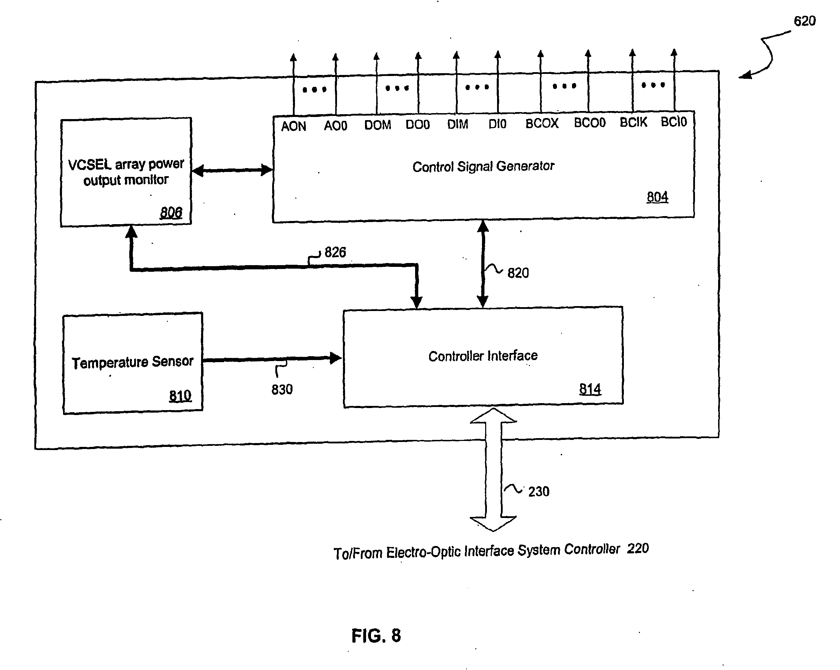

Turning now to FIG. 8, a more detailed block diagrammatic representation is provided of the array control circuitry 620. As shown, the array control circuitry 620 includes a control signal generator 804, a VCSEL array power output monitor 806, a temperature sensor 810 and a controller interface 814. The control signal generator 804 contains the circuits necessary to control the bias sources 720, 740, 770 within, and the gain control signals applied to, the bus/CPU interface 104. Specifically, control signals AOO ... AON control the bias sources 720 within the address drive circuitry 604, control signals DO0...DOM control the bias sources 740 within the data drive circuitry 608, and controls DI0 ... DIM determine the gain control signals 754, 784 applied to transimpedance amplifier/differential drivers 752, 780 in the data receive circuitry 612 and the bus controls and clock input/output circuitry 616. In addition, control signals BCO0 ...BCOX control the bias sources 770 within the bus controls and clock input/output circuitry 616. The control signal generator 804 contains current source reference current generators used in generating the control signals applied to the bias sources, and may also contain digital to analog converter modules to facilitate generation of the gain control signals applied to the transimpedance amplifier/differential drivers. As shown, the control signal generator 804 is connected to the controller interface 814 via an array bus 820.

In the exemplary embodiment of FIG. 8 the VCSEL array power output monitor 806 contains one or more monitor circuits, each of which contains a VCSEL laser coupled to a photodiode and to a photodiode current amplifier. In operation, the VCSEL laser within each monitor circuit is driven in a way that is representative of one or more other VCSEL lasers used within the bus/CPU interface 104, and its output is monitored by the photodiode within each such monitor circuit. Accordingly, the output of the photodiode within each monitor circuit is representative of the operation of one or more other VCSEL lasers actually employed during operation of the bus/CPU interface 104. As shown, the outputs from the VCSEL array power output monitor 806 are connected to the controller interface 814 through a monitor bus 826.

The temperature sensor 810 will generally incorporate one or more sensors used to determine the ambient temperature and/or the actual temperature of a given set of VCSEL lasers within the bus/CPU interface 104. Accordingly, the sensors are appropriately placed within the bus/CPU interface 104 in order to effect this purpose. As shown, the temperature sensor 810 is connected to the controller interface 814 through a sense bus 830.

The controller interface 814 will generally be realized as a combination of drivers and receivers used to interface the control signal generator 804, VCSEL array power output monitor 806, and temperature sensor 810 to the electro-optic interface system controller 220 through the control bus 230. Control functions executed by the electro-optic system controller 220 allow for automatic calibration of the VCSEL laser arrays within the CPU/bus interface 104 and automatic adjustment of the array control circuitry 620 as necessary to compensate for manufacturing variations and temperature changes.

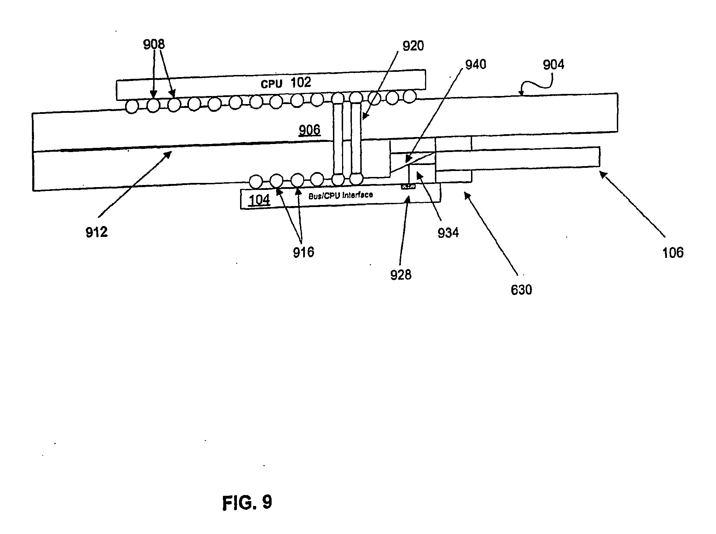

In the exemplary embodiment of FIG. 9, the optical interconnect 630 comprises a set of optical waveguides configured to direct the light from the VCSEL arrays within the bus/CPU interface 104 to the optical bus 106. Similarly, the optical interconnect 630 also functions to direct the light from the optical bus 106 to the appropriate photodiodes of the various receive circuits of the CPU/bus interface. To effect this end the optical interconnect 630 may contain commercially available optical fiber positioning elements, silicon fiber alignment devices, fiber optic cable connectors, mirrors and lenses. The optical bus 106 may comprise a set of multi-mode or single-mode optical fibers. Alternately, the optical bus 106 may simply comprise an unobstructed spatial corridor within the computer system 100, which may or may not be evacuated of air.

FIG. 9 provides a cross-sectional view of an exemplary packaging configuration for the computer system 100 of the present invention. In general, the packaging of the embodiment of FIG. 9 has been designed with a view toward substantially minimizing the length of the electrical signal paths extending between the those components of the computer system 100 in electrical communication. As shown, the CPU 102 is mounted upon a top surface 904 of a substrate 906 by means of CPU solder bumps 908. The substrate 906 may be comprised of multiple layers of ceramic or other material having appropriate thermal expansion characteristics. The substrate 906 may also contain internal layers such as a ground/shield 912. The solder bumps 908 may be deposited on the silicon substrate of the CPU 102 using conventional techniques (see, e.g., Low Cost Flip Chip Technologies, John H. Lau, McGraw-Hill, 2000). In the exemplary embodiment the CPU solder bumps 908 are in contact with the metallic differential stripline transmission lines of the transmission line interconnect arrangement 206. These transmission lines may be realized using multi-layer fabrication techniques so as to enable the use of ground planes configured to control the applicable impedance. The CPU solder bumps 908 are in electrical communication with corresponding bus/CPU interface solder bumps 916 through by way of a plurality of metallized substrate vias 920. As is apparent from FIG. 9, in the exemplary embodiment the CPU 102 and bus/CPU interface 104 are attached to opposing surfaces of the substrate 906. This advantageously minimizes the electrical connection distance between the CPU solder bumps 908 and the bus/CPU interface solder bumps 916 to the thickness of the substrate 906.

Referring again to FIG. 9, the optical elements of the bus/CPU interface 104 are arranged so as to achieve appropriate alignment with the optical interconnect 630. For example, Fig. 9 depicts a VCSEL laser 928 of the bus/CPU interface 104 emitting a light beam 934. The light beam 934 is reflected by a light reflector 940, which in turn sends the light beam 934 to the appropriate light conduit of the optical bus 106. Although VCSEL lasers are known to generate relatively well-controlled light beams, it may nonetheless be necessary to employ focusing lenses (not shown) in order to maximize the power coupled into the optical bus 106. If in FIG. 9 a photodiode is substituted for the VCSEL laser 928 and the direction of the light beam 934 is reversed, it may be appreciated that this may provide an arrangement for coupling the light from the optical bus 106 to such photodiode. It may be further appreciated that such coupling may be enhanced through use of a reflector or other conventional techniques (e.g., shaping and/or coating of the terminations of the fibers of the optical bus 106).

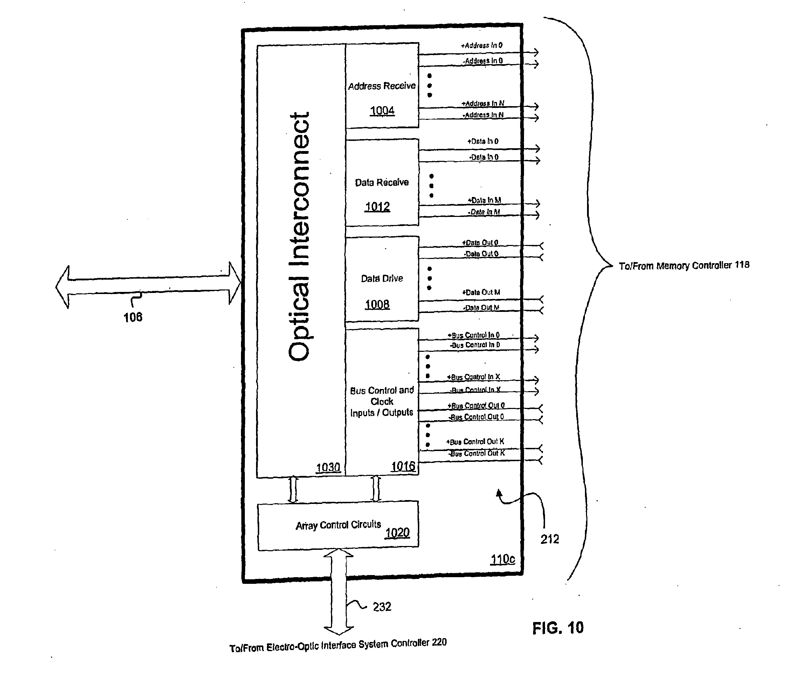

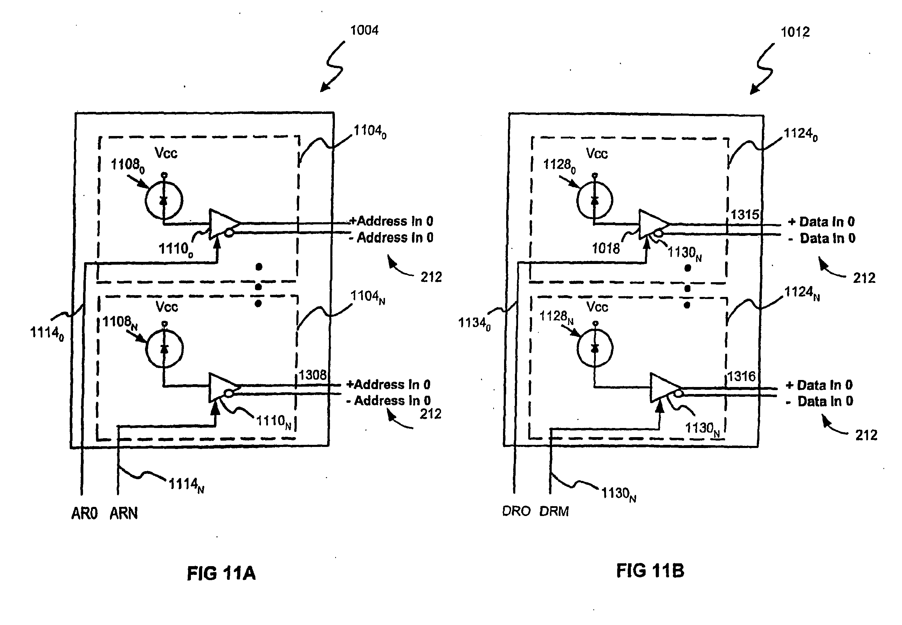

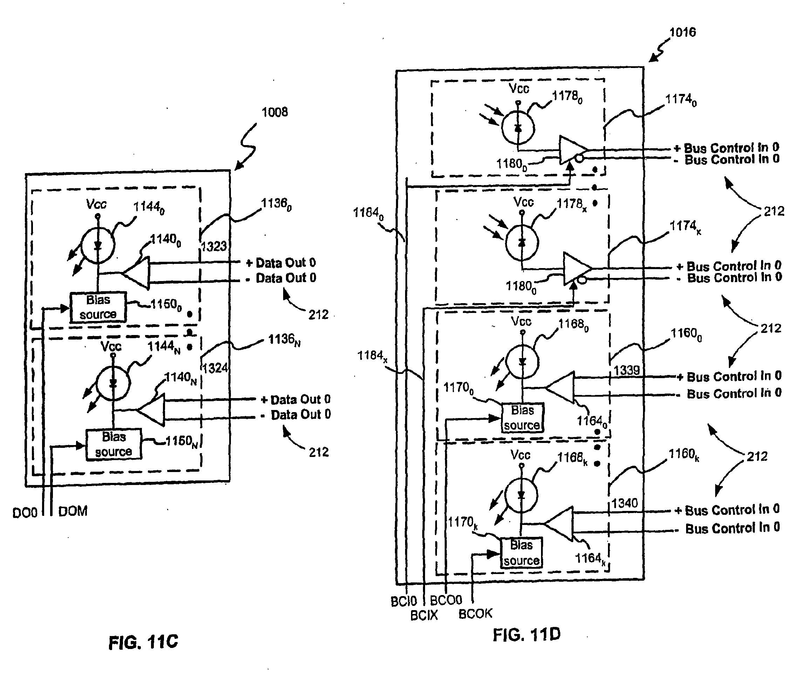

Turning now to FIG. 10, a block diagrammatic representation is provided of the bus/device interface 110c. The bus/device interface 110c functions to convert electrical signals originating in the memory controller 118 into optical signals transmitted to the optical bus 106. To this end the bus/device interface 110c contains opto-electronic circuits and control circuits able to perform the necessary conversion functions, such circuitry being described in further detail with reference to FIGS. 11-13. As shown in FIG. 10, the bus/device interface 110c includes address receive circuitry 1004, data drive circuitry 1008, data receive circuitry 1012, bus controls and clock input/output circuitry 1016, array control circuitry 1020, and an optical interconnect 1030. The remaining bus/device interfaces 110 may be implemented in a manner substantially similar or identical as is described herein with reference to the bus/device interface 110c.

Referring now to FIGS. 11A-11D, partially schematic representations are provided of the various drive and receive circuits included within the bus/device interface 110c. As shown in FIG. 11A, the address receive circuitry 1004 is comprised of an array of optical to electrical converters 1104 operative to convert the data received from the optical bus 106 into electrical signal energy representing the individual bits of address information. Each optical to electrical converter 1104 corresponds to one bit of each multi-bit address signal carried by the optical bus 106 from the CPU 102 to the memory controller 118 via the bus/device interface 110c. The first optical to electrical converter 1104₀ is comprised of a photodiode 1108₀ and a transimpedance amplifier/differential driver 1110₀. The gain of the transimpedance amplifier/differential driver 1110₀ is controlled by a gain control signal 1114₀ received from the array control circuitry 1020. The transimpedance amplifier/differential driver 1110₀ operates to amplify the current generated at the photodiode 1108₀, which is proportional to the light received from a corresponding channel of the optical bus 106. The remaining optical to electrical converters 1104 of the address receive circuitry 1004 may be configured substantially identically to the first optical to electrical converter 1104₀.

Referring to FIG. 11B, a partially schematic representation is provided of the data receive circuitry 1012. As shown in FIG. 11B, the data receive circuitry 10112 is comprised of an array of optical to electrical converters 1124 operative to convert the data received from the optical bus 106 into electrical signal energy representing the individual bits of data information. Each optical to electrical converter 1124 corresponds to one bit of each multi-bit data signal carried by the optical bus 106 from the CPU 102 to the memory controller 118 via the bus/device interface 110c. The first optical to electrical converter 1124₀ is comprised of a photodiode 1128₀ and a transimpedance amplifier/differential driver 1130₀. The gain of the transimpedance amplifier/differential driver 1130₀ is controlled by a gain control signal 1134₀ received from the array control circuitry 1020. The transimpedance amplifier/differential driver 1130₀ operates to amplify the current generated at the photodiode 1128₀, which is proportional to the light received from a corresponding channel of the optical bus 106. The remaining optical to electrical converters 1124 of the datareceive circuitry 1012 may be configured substantially identically to the first optical to electrical converter 1124₀.

Attention is now drawn to FIG. 11C, which shows the data drive circuitry 1008 to be comprised of an array of electrical to optical converters 1136 operative to convert the data signals from the interconnect arrangement 212 into optical signals disposed to carry data information via the optical bus 106. Specifically, each electrical to optical converter 1136 is responsible for converting one bit of each multi-bit data signal carried by the optical bus 106. As shown, a first electrical to optical converter 1136₀ is comprised of VCSEL laser driver 1140₀ having an output connected to a control terminal of a VCSEL laser 1144₀. The first electrical to optical converter 1136₀ further includes a bias source 1150₀ set to pull sufficient current through the VCSEL laser 1144₀ such that its operating point is positioned at a value slightly above its lasing threshold. The remaining electrical to optical converters 1136 of the data drive circuitry 1008 may be configured substantially identically to the first electrical to optical converter 1136₀.

Referring to FIG. 11D, a partially schematic representation is provided of the bus controls and clock input/output circuitry 1016. As shown, the bus controls and clock input/output circuitry 1016 is comprised of an array of electrical to optical converters 1160 and an array of optical to electrical converters 1174. Each electrical to optical converter 1160 is operative to convert the control signals from one of the bus control lines of the interconnect arrangement 212 into optical signals disposed to carry control information via the optical bus 106. Specifically, each electrical to optical converter 1160 is responsible for converting one bit of each multi-bit control signal carried by the optical bus 106 from the memory controller 118. As shown, a first electrical to optical converter 1160₀ is comprised of VCSEL laser driver 1164₀ having an output connected to a control terminal of a VCSEL laser 1168₀. The first electrical to optical converter 1160₀ further includes a bias source 1170₀ set to pull sufficient current through the VCSEL laser 1168₀ such that its operating point is positioned at a value slightly above its lasing threshold. The remaining electrical to optical converters 1160 of the bus controls and clock input/output circuitry 1016 may be configured substantially identically to the first electrical to optical converter 1160₀.

Again referring to FIG. 11D, the electrical converters 1174 are operative to convert the control signals received from the optical bus 106 into electrical signal energy representing the individual bits of control information to be sent to the memory controller 118. Each optical to electrical converter 1174 corresponds to one bit of each multi-bit control signal received over the optical bus 106 from the CPU 102. The first optical to electrical converter 1174₀ is comprised of a photodiode 1178₀ and a transimpedance amplifier/differential driver 1180₀. The gain of the transimpedance amplifier/differential driver 1180₀ is controlled by a gain control signal 1184₀ received from the array control circuitry 1020. The transimpedance amplifier/differential driver 1180₀ operates to amplify the current generated at the photodiode 1178₀, which is proportional to the light received from a corresponding channel of the optical bus 106. The remaining optical to electrical converters 1174 may be configured substantially identically to the first optical to electrical converter 1174₀.

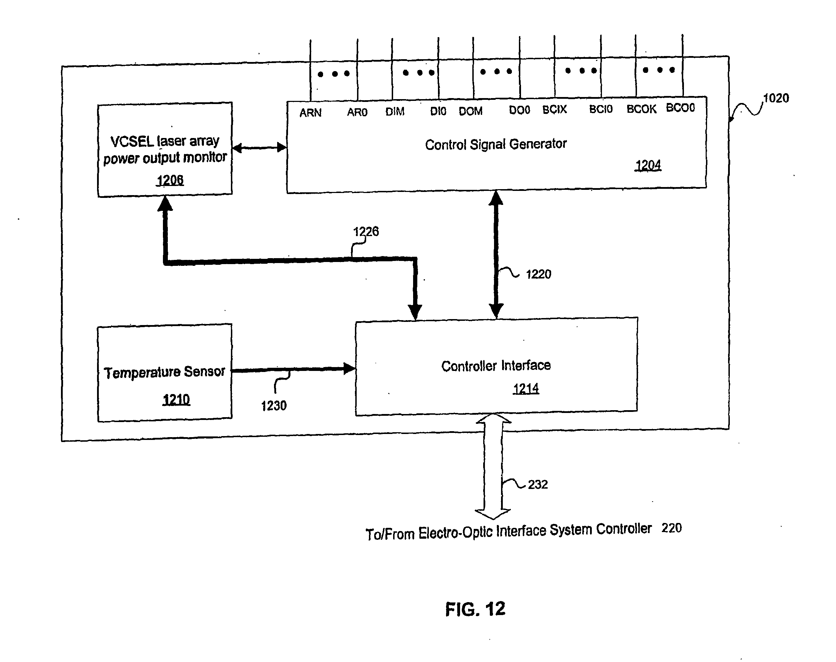

Turning now to FIG. 12, a more detailed block diagrammatic representation is provided of the array control circuitry 1020. As shown, the array control circuitry 1020 includes a control signal generator 1204, a VCSEL array power output monitor 1206, a temperature sensor 1210 and a controller interface 1214. The control signal generator 1204 contains the circuits necessary to control the bias sources within, and the gain control signals applied to, the bus/device interface in the manner indicated by FIGS. 11 and 12. The control signal generator 1204 contains current source reference current generators used in generating the control signals applied to the bias sources, and may also contain digital to analog converter modules to facilitate generation of the gain control signals applied to the transimpedance amplifier/differential drivers. As shown, the control signal generator 1204 is connected to the controller interface 1214 via an array bus 1220.

In the exemplary embodiment of FIG. 12 the VCSEL array power output monitor 1206 contains one or more monitor circuits, each of which contains a VCSEL laser coupled to a photodiode and to a photodiode current amplifier. In operation, the VCSEL laser within each monitor circuit is driven in a way that is representative of one or more other VCSEL lasers used within the bus/device interface 110c, and its output is monitored by the photodiode within each such monitor circuit. Accordingly, the output of the photodiode within each monitor circuit is representative of the operation of one or more other VCSEL lasers actually employed during operation of the bus/CPU interface 110c. As shown, the outputs from the VCSEL array power output monitor 1206 are connected to the controller interface 1214 through a monitor bus 1226.

The temperature sensor 1210 will generally incorporate one or more sensors used to determine the ambient temperature and/or the actual temperature of a given set of VCSEL lasers within the bus/device interface 110c. Accordingly, the sensors are appropriately placed within the bus/device interface 110c in order to effect this purpose. As shown, the temperature sensor 1210 is connected to the controller interface 1214 through a sense bus 1230. The controller interface 1214 will generally be realized as a combination of drivers and receivers used to interface the control signal generator 1204, VCSEL array power output monitor 1206, and temperature sensor 1210 to the electro-optic interface system controller 220 through the control bus 232. Control functions executed by the electro-optic system controller 220 allow for automatic calibration of the VCSEL laser arrays within the bus/device interface 110c and automatic adjustment of the array control circuitry 1020 as necessary to compensate for manufacturing variations and temperature changes.

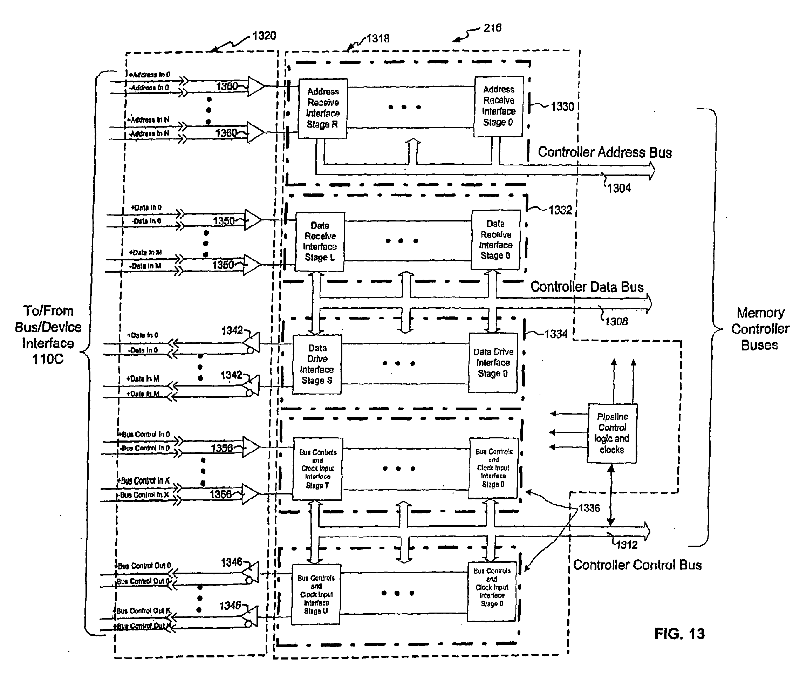

FIG. 13 provides an illustrative representation of an exemplary implementation of the memory controller interface 216. As may be appreciated by reference to FIG. 13, the memory controller interface 216 is structured substantially similarly to the CPU interface 202. In the exemplary embodiment the memory controller interface 202 provides the logic necessary to connect the internal buses of the memory controller 118 to the optical bus elements of the computer system 100. The internal buses of the memory controller generally consist of an internal controller address bus 1304, a bi-directional internal controller data bus 1308, and a bi-directional internal controller control bus 1312. As shown, the memory controller interface 216 includes interface logic 1318 and an input/output section 1320. The interface logic 1318 consists of a number of logic modules including an address receive interface 1330, a data receive interface 1332, a data drive interface 1334, and a bus controls and clock interface 1336.

The input/output section 1320 consists of a set of drivers and receivers designed to drive and receive from the transmission line interconnect arrangement 212. These drivers and receivers may be implemented using differential drivers and differential receivers in order to minimize cross-talk interference between the various signals carried by the optical bus 106. As shown in FIG. 13, the input/output section 1320 contains a first plurality of differential line drivers 1342, each of which has an input electrically connected to the data drive interface 1334 and a differential output electrically connected to a pair of address lines of the transmission line interconnect arrangement 212. A second plurality of differential line drivers 1346 is also provided, each of which has an input electrically connected to the bus controls and clock interface 1336 and a differential output electrically connected to a pair of data lines of the transmission line interconnect arrangement 212. The input/output section 1320 further includes a first plurality of differential line receivers 1350, each of which has a differential input electrically connected to a pair of data lines of the transmission line interconnect arrangement 212 and an output electrically connected to the data receive interface 1332. The input/output section 1320 further includes a second plurality of differential line receivers 1356, each of which has a differential input electrically connected to a pair of bus control lines of the transmission line interconnect arrangement 212 and an output electrically connected to the bus controls and clock interface 1336. In addition, a third plurality of differential line receivers 1360 is also included, each of which has a differential input electrically connected to a pair of bus control lines of the transmission line interconnect arrangement 212 and an output electrically connected to the address receive interface 1330.

Referring again to FIG. 13, the various logic modules of the interface logic 1318 are realized using pipelined architectures substantially identical to the pipelined architectures described above with reference to the interface logic 318. As was described above, these pipelined architectures enable three different operating parameters to be adjusted in order to achieve desired operational characteristics; namely, bus width, bus depth and clock speed may be modified as desired.

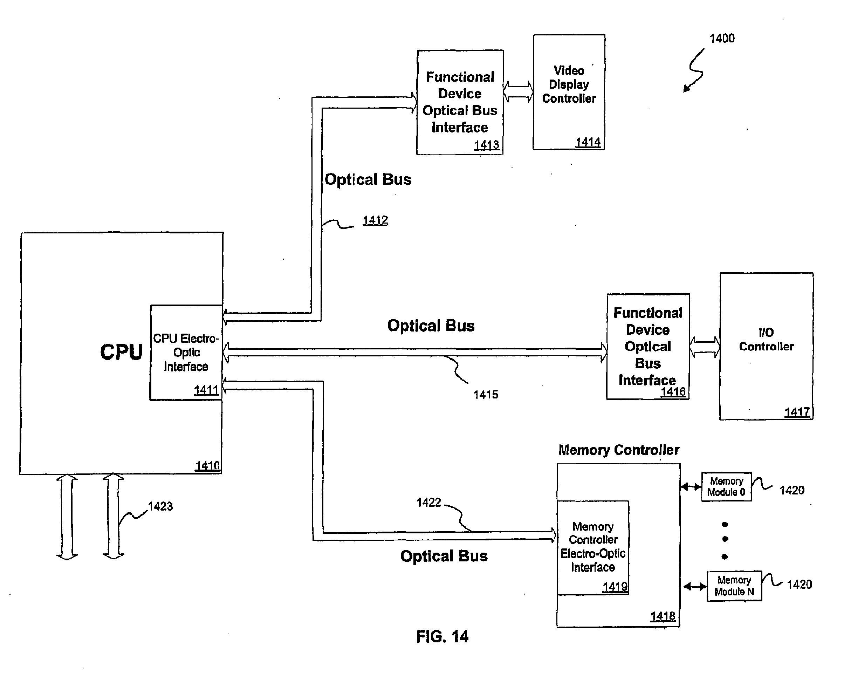

FIG. 14 depicts a second exemplary embodiment of a computer system 1400 incorporating an optical bus in accordance with the present invention. A CPU 1410 contains a CPU electro-optic interface 1411. The interface 1411 contains all of the circuits necessary to interface directly to any of the optical busses 1412, 1415, and 1422. The CPU electro-optic interface 1411 contains the optical bus interface circuits on the same substrate obtained through a dual step IC masking process. In the manufacturing process, the CMOS VLSI circuits are first fabricated in a wafer while masking the location targeted for the GaAs circuits. Once the CMOS VLSI circuits are made, as a second step, the GaAs circuits are fabricated on the same wafer while masking the previously made CMOS VLSI circuits. Placement of the electro-optic interface on the same substrate as the existing circuits of the CPU 1410 or the memory controller 1418 has the advantage of further reducing and simplifying the electrical signal paths. The added level of integration results in a substantially higher speed of transmission as compared to the case when the two sets of circuits are on different packages.

In FIG. 14, a first optical Bus 1422 is shown interfacing directly with the memory controller 1418. The memory controller 1418 has the necessary memory controller electro-optic interface 1419 on the same substrate as the rest of the controller circuits. The memory controller 1418 is connected to a set of N memory modules 1420. FIG. 14 also depicts two other functional units connected through optical buses to the CPU 1410. An I/O controller 1417 is connected to a second optical bus 1415 through the functional device optical bus interface 1416. In addition, a video display controller 1414 is connected through a third optical bus 1412 to a functional device optical bus interface 1413. In the embodiment of FIG. 14, the optoelectronic interfaces for the the I/O controller 1417 and the video display controller 1414 are configured as discrete components separate from their associated functional units. Of course, in various embodiments the the required speed for transmissions may be considered in determining which functional units should be provided with an integrated electro-optic interface, a separate and distinct electro-optic interface, and which functional units may instead be connected to a conventional electronic processor bus 1423.

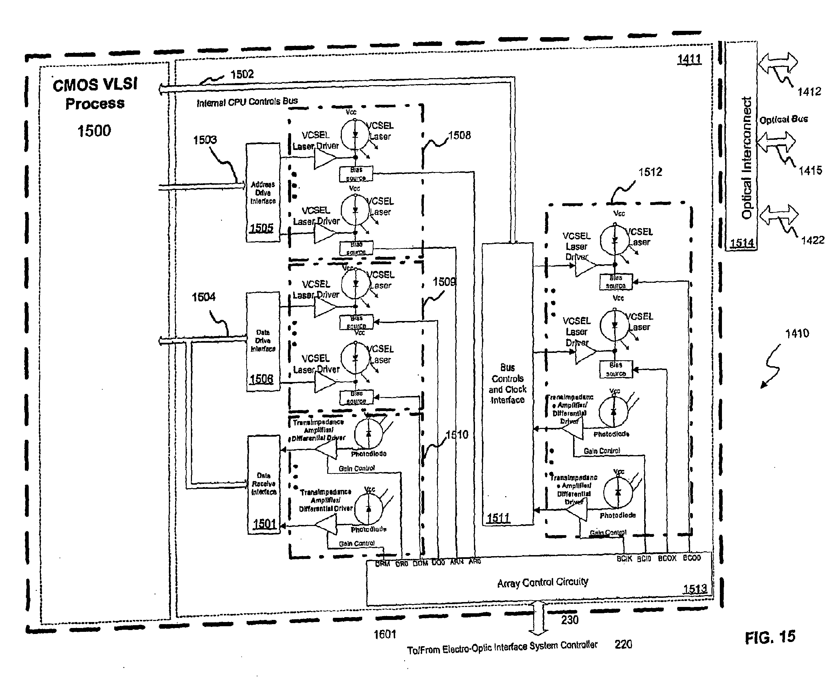

FIG. 15 provides a more detailed illustrative representation of the CPU 1410 as incorporating the CPU electro-optic interface 1411 of the second exemplary embodiment of the present invention. In FIG. 15, the functionality of the CPU 1410 is represented as CMOS VLSI process 1500 integrated on a common substrate with the CPU electro-optic interface 1411. In operation, the CPU electro-optic interface 1411 is utilized to convert the electrical signals originating from the CPU internal buses 1502,1503,1504 to optical signals transmitted to the optical buses 1412, 1422, 1415. The CPU electro-optic interface 1411 contains optoelectronic circuits and control circuits able to perform conversion functions. In the second exemplary embodiment the CPU electro-optic interface 1411 is comprised of an address drive interface 1505 and address drive circuits 1508, data drive interface 1506 and data drive circuits 1509, data receive interface 1507 and data receive circuits 1510, bus controls and clock interface 1511 and bus control and clock inputs and outputs circuits 1512 and array control circuitry 1513. The components depicted in FIG. 15 may be packaged together with a corresponding optical interconnect 1514, which provided the requisite optical coupling to the optical buses 1412, 1415, 1422. The components and circuitry comprising the CPU electro-optic interface 1411 have similar functions as the corresponding circuits described above with reference to FIGS. 1-13.

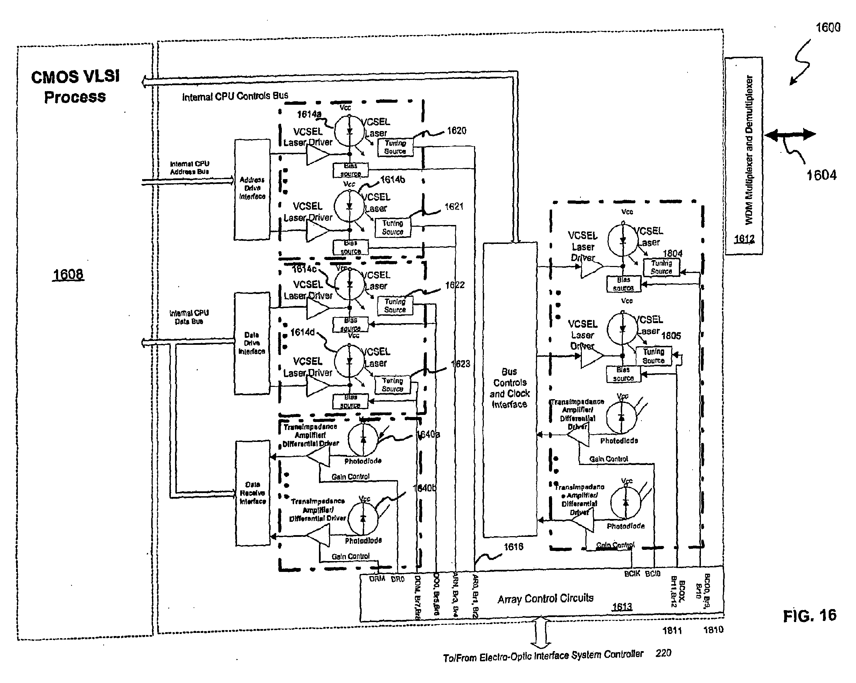

FIG. 16 illustratively represents a third exemplary embodiment of a computer system 1600 in accordance with the present invention. The third embodiment of the computer system 1600 is implemented similarly to the second embodiment 1400, but utilizes wavelength division multiplexing (WDM) to effect optical communication between a CPU electro-optic interface 1602 and an optical bus 1604. Again, CPU functionality is represented as a CMOS VLSI process 1608.

In the embodiment of FIG. 16, WDM is facilitated by the use of tunable VCSEL lasers. For example, a first tunable VCSEL laser 1614a is tuned with a tuning current applied by a tuning source 1620. The tuning source 1620 is controlled by a signal Br1 1616 from the array control circuitry 1613. Additional tuning currents for lasers requiring both fine tuning and coarse tuning can also be provided by the array control circuitry 1613 and by an appropriate tuning source similar to tuning source 1620. The laser light from the VCSEL lasers 1614 is coupled to an optical fiber comprising the optical bus 1604 through a WDM multiplexer and demultiplexer 1612. In addtion, the WDM multiplexer and demultiplexer 1612 routes incoming light from the optical bus 1604 to the appropriate photodiode 1640. The WDM multiplexer and demultiplexer 1612 can be made with, for example, Micro-electronic Mechanical Systems (MEMS) or with Electro Holographic light Switching Systems (see, e.g., The Electroholographic Optical Switch by A. J. Agranat, et al, Department of Applied Physics, The Hebrew University of Jerusalem, Jerusalem 91904, Israel). The utilization of WDM techniques may advantageously minimize the number of optical fibers required in certain implementations of the optical bus 1604. Moreover, use of WDM techniques may also potentially reduce the number of lasers employed in driving the optical bus 1604, since it may be possible to associate the multiple wavelengths of a tunable laser with different functional units.

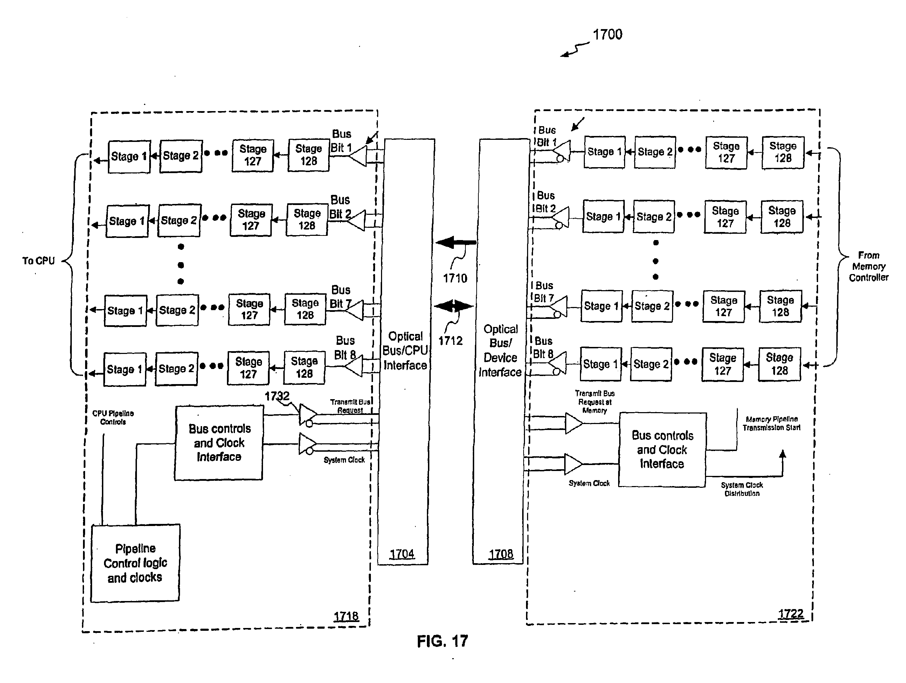

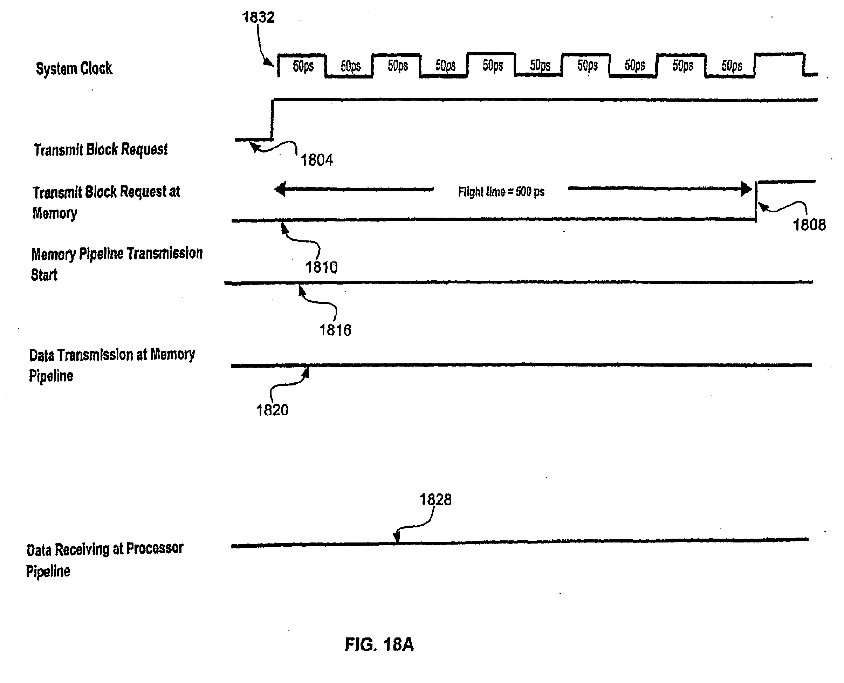

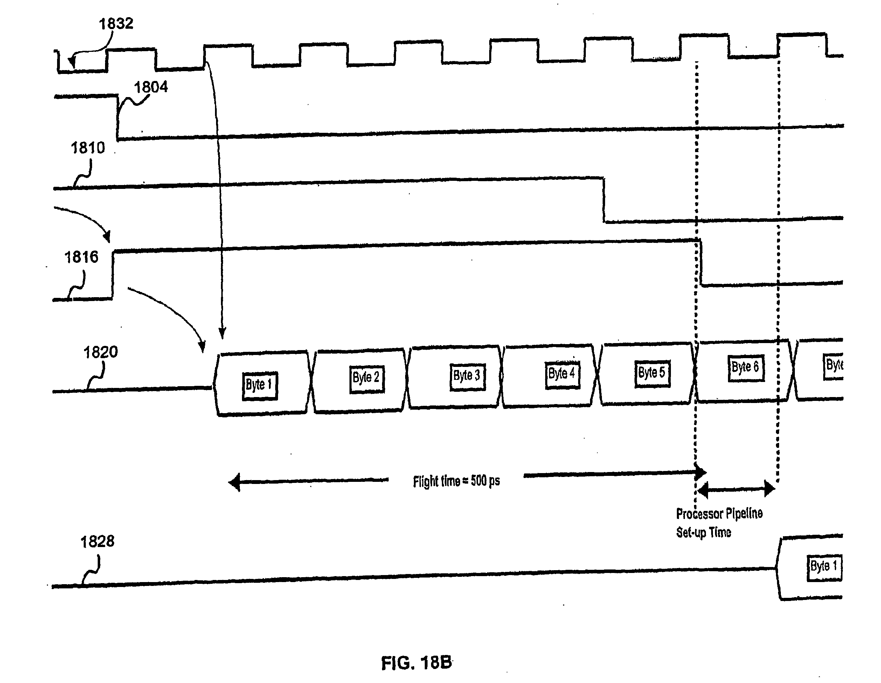

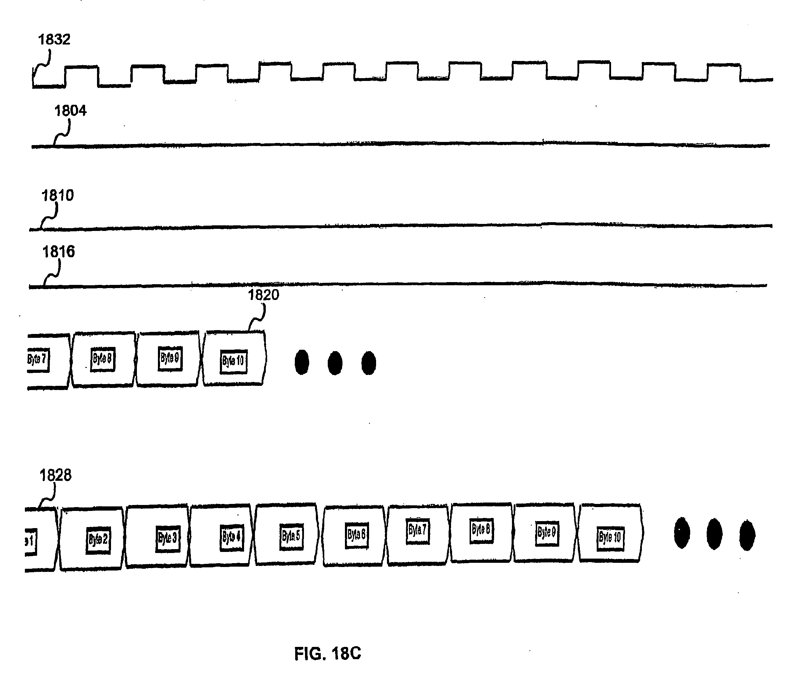

Turning now to FIGS. 17 and 18, an example is provided of a data transmission process using an optical bus arrangement in accordance with the present invention. In particular, FIG. 17 depicts selected portions of an optical bus arrangement 1700 incorporating a bus/CPU interface 1704 and a bus/device interface 1708 in optical communication via an 8-bit optical bus 1710 and a 2-bit optical control bus 1712. As shown, a CPU interface 1718 is interposed and electrically connected between the bus/CPU interface and the various internal components and buses of the CPU (not shown). Similarly, a memory controller interface 1722 is interposed and electrically connected between the bus/device interface 1708 and the various internal components and buses of a memory controller (not shown). For purposes of clarity, only the piplelined elements of the CPU interface 1718 and memory controller interface 1722 within which data is temporarily present during transfer from the memory controller to the CPU are depicted in FIG. 17. Other components used in the transfer of information to and from the CPU and memory controller previously described above (e.g., address drive and receive circuitry, control circuitry and associated buses) are not shown in FIG. 17. The bus/CPU interface 1704 and the bus/device interface 1708 may each be implemented in the manner described above. Accordingly, the interfaces 1704 and 1708 are configured to include the lasers, drivers and control circuits necessary to convert incident electrical signals into optical signals for transmission via the optical buses 1710, 1712 and to convert the received optical signals into electrical signals.

As noted above, the optical bus 1710 is 8 bits in width and the optical control bus 1712 is 2 bits in width. Accordingly, the optical bus 1710 is operative to transfer 8 bits of information during each bus clock cycle while the optical control bus 1712 transfer 2 bits of information during each such cycle. As shown, the CPU interface 1718 and the memory controller interface 1722 are each configured to include one 128-stage pipelined data drive/receive interface for each bit of the 8-bit optical bus 1710. Each of the 128 stages of each drive interface within the memory controller interface 1722 is connected to and loaded by a data bus (not shown) of the memory controller; similarly, each of the 128 stages of each data receive interface within the CPU interface 1718 is connected to a data bus (not shown) of the CPU. As is known, conventional computer systems may include internal data buses of 32, 64 or more bits. If the embodiment of FIG. 17 were incorporated within a computer system configured with an internal data bus of, for example, 128 bits, then each bus line of this 128-bit internal bus could be connected to one stage of each 128-stage pipelined data/drive receive interface. In this case the memory controller (not shown) could potentially be configured to load each of the 128 stages of each data drive interface within the memory controller interface 1722 during each of its clock cycles.

FIG. 18 is a timing diagram representative of the data transfer process from the memory controller to the CPU of FIG. 17. The data transfer process may begin with the transmission, from the CPU to the memory controller via the optical bus 1710 and address drive/receive interfaces (not shown) of the CPU interface 1718 and memory controller interface 1722, of an address of a block of data to be transferred. In a substantially similar manner the CPU also sends an indication to the memory controller of the amount (e.g., number of blocks) of data to be transferred. In response, the memory controller appropriately loads each of the 128-stage data drive interfaces of the memory controller interface 1722. As represented by trace 1804 of FIG. 18, the CPU then sends a Transmit Block Request via control driver 1732 (FIG. 17). The memory controller interface 1722 then receives the Transmit Block Request (as indicated by rising edge 1808 of trace 1810). As shown in FIG. 18, a "flight time" of approximately 500 picoseconds is shown to separate transmission of the Transmit Block Request and its reception at the memory controller interface 1722. This "flight time" assumes an optical transmission path of approximately 15 cm between the CPU interface 1718 and the memory controller interface 1722. Of course, shorter flight times could be achieved by minimization of the length of this optical transmission path through the use of flip-chip packaging arrangements such as that described above with reference to FIG. 9.

Referring again to FIG. 18, the memory controller then issues a Memory Pipeline Transmission Start signal (trace 1816) at an appropriate time. The memory controller then commences transmission of a set of 128 data blocks, the first ten (10) of which are illustratively represented by trace 1820 of FIG. 18. After propagating through the optical transmission path for the applicable flight time (e.g., 500 picoseconds), the 128-stage pipelined data receive interfaces of the CPU interface 1718 begin receiving the transmitted data (trace 1828). Data reception is completed one byte at a time until all 128 stages of each of the eight (8) data receive interfaces of the CPU interface 1718 have been filled. Transmission is completed upon reading of the contents of each such 128-stage data receive interface into the internal cache memory of the CPU.

In the exemplary embodiment represented by FIG. 18, it is observed that one byte of data is sent every 100 picoseconds (see trace 1832 of system clock). This corresponds to a data transfer rate of 80 gigabits per second (Gbps), which substantially exceeds the transfer rates possible using conventional electronic buses. Moreover, if the width of the 8-bit optical bus 1710 were expanded to 32, data transfer rates of approximately 320 Gbps could be achieved. It is believed that the data transfer speeds enabled by these types of configurations may significantly advance the state of the art relating to data transfer involving, for example, mass storage systems, high performance servers and supercomputers.

The foregoing description, for purposes of explanation, used specific nomenclature to provide a thorough understanding of the invention. However, it will be apparent to one skilled in the art that the specific details are not required in order to practice the invention. In other instances, well-known circuits and devices are shown in block diagram form in order to avoid unnecessary distraction from the underlying invention. Thus, the foregoing descriptions of specific embodiments of the present invention are presented for purposes of illustration and description. They are not intended to be exhaustive or to limit the invention to the precise forms disclosed, obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. It is intended that the following Claims and their equivalents define the scope of the invention.

## Claims

1. A computer system assembly comprising:
a substrate (906) having a first top surface (904) and a second surface on the opposite side of the substrate to the top surface;
a processing unit (102) mounted upon the first surface (904), the processing unit (102) including an internal bus (304) coupled to an array of differential line drivers (342), the differential line drivers (342) fabricated on a common integrated circuit with the processing unit (102);
an optical bus/CPU interface unit (104) mounted on the second surface, the bus/CPU interface (104) including:
an array of laser drivers (710) within the bus/CPU interface (104), the laser drivers (710) coupled to the array of differential line drivers (342) by an array of transmission lines (206); and
an array of lasers (714) coupled to the array of laser drivers (710), the optical bus interface unit in optical communication with an optical bus (106) disposed to support the propagation of optical information signals.

2. The computer assembly (100) of claim 1 further comprising a light reflector (940) for directing a light beam (934) from a laser (928) of the array of lasers (714) to the optical bus (106).

3. The computer assembly (100) of claim 2 further comprising an optical interconnect (630) coupled to the light reflector (940).

4. The computer assembly (100) of claim 1 further comprising CPU solder bumps (908) on the top surface of the substrate (906) for mounting the processing unit (102).

5. The computer assembly (100) of claim 4 further comprising bus/CPU interface solder bumps (916) on the opposite surface of the substrate (906) in electrical communication with the CPU solder bumps (908) through an array of metalized substrate vias (920) that minimizes electrical connection distance to a thickness of the substrate (906).

## Patentansprüche

1. Ein Computersystemeinheit bestehend aus Folgenden:
einem Träger (906) mit einer ersten Oberfläche (904) und einer zweiten Oberfläche auf der entgegengesetzten Seite des Trägermaterials zur Oberfläche;
einer Verarbeitungseinheit (102), die auf der ersten Oberfläche (904) montiert ist; wobei zur Verarbeitungseinheit (102) eine interne Sammelschiene (304) gehört, die mit einer Reihe von Differentialleitungstreibern (342) verbunden ist, wobei die Differentialleitungstreiber auf einer gemeinsamen integrierten Schaltung mit der Verarbeitungseinheit (102) erstellt werden;
einer optischen Sammelschienen-/CPU-Schnittstelleneinheit (104), die auf der zweiten Oberfläche montiert ist, wobei zur Sammelschlenen-/CPU-Schnittstelle (104) Folgenden gehören:
eine Reihe von Lasertreibern (710) in der Sammelschienen-/CPU-Schnittstelle (104), wobei die Lasertreiber (710) durch eine reihe von Übertragungsleitungen (206) mit der Reihe der Differentialleitungstreiber (342) verbunden ist; und
eine Reihe von Lasern (714), die mit einer Reihe von Lasertreibern (710) verbunden sind, wobei die optische Sammelschienenschnittstelle mit einer optischen Sammelschiene (106) in optischer Kommunikation steht, die so angeordnet ist, dass sie die Verbreitung optischer Informationssignale unterstützt.

2. Die Computersystemeinheit (100) von Anspruch 1, die zudem einen Lichtreflektor (940) aufweist, der einen Lichtstrahl (934) von einem Laser (928) der Reihe der Laser (714) zur optischen Sammelschiene (106) leitet.

3. Die Computersystemeinheit (100) von Anspruch 2, die zudem einen optischen Anschluss (630) aufweist, der an den Lichtreflektor (940) angeschlossen ist.

4. Die Computersystemeinheit (100) von Anspruch 1, die zudem CPU-Löthöcker (908) auf der Oberfläche des Trägers (906) zwecks Montage der Verarbeitungseinheit (102) aufweist.

5. Die Computersystemeinheit (100) von Anspruch 4, die zudem Sammelschienen-/CPU-Schnittstellen-Löthöcker (916) auf der entgegengesetzten Seite des Trägers (906) aufweist, die über eine Reihe metallisierter Verbindungslöcher (920) im Träger in elektrischer Kommunikation mit den CPU-Löthöckern (908) stehen, wodurch sich der elektrische Anschlussabstand auf eine Dicke des Trägers (906) reduziert.

## Revendications

1. Ensemble de système informatique comprenant :
un substrat (906) comportant une première surface supérieure (904) et une deuxième surface sur le côté du substrat opposé à la surface supérieure ;
une unité de traitement (102) montée sur la première surface (904), l'unité de traitement (102) comprenant un bus interne (304) couplé à un réseau de pilotes de lignes différentiels (342), les pilotes de lignes différentiels (342) étant fabriqués sur un circuit intégré commun à l'unité de traitement (102) ;
une unité d'interface bus optique/UCT (104) montée sur la deuxième surface, l'interface bus/UCT (104) comprenant :
un réseau de pilotes laser (710) dans l'interface bus/UCT (104), les pilotes laser (710) étant couplés au réseau de pilotes de lignes différentiels (342) par un réseau de lignes de transmission (206) ; et
un réseau de lasers (714) couplé au réseau de pilotes laser (710), l'unité d'interface de bus optique étant en communication optique avec un bus optique (106) disposé pour supporter la propagation des signaux d'informations optiques.

2. Ensemble informatique (100) selon la revendication 1, comprenant en outre un réflecteur de lumière (940) pour diriger un rayon lumineux (934) d'un laser (928) du réseau de lasers (714) au bus optique (106).

3. Ensemble informatique (100) selon la revendication 2, comprenant en outre un interconnecteur optique (630) couplé au réflecteur de lumière (940).

4. Ensemble informatique (100) selon la revendication 1, comprenant en outre des bosses de soudure d'UCT (908) sur la surface supérieure du substrat (906) pour monter l'unité de traitement (102).

5. Ensemble informatique (100) selon la revendication 4, comprenant en outre des bosses de soudure d'interface bus/UCT (916) sur la surface opposée du substrat (906) en communication électrique avec les bosses de soudure de l'UCT (908) par le biais d'un réseau de vias métallisés (920) ménagés dans le substrat qui minimisent la distance de connexion électrique à seulement l'épaisseur du substrat (906).
